# EUROPEAN PATENT APPLICATION

(11) **EP 0 623 512 A2**
(43) Date of publication of application: **09.11.1994**
(21) Application number: 94303146.8
(22) Date of filing: 29.04.1994
(51) Int. Cl.: B65B 35/50, B65G 57/32, B65B 57/00

(54) **Methods of and apparatus for stacking articles**

(30) Priority: 03.05.1993 US 57478
(71) Applicant: HAYSSEN MANUFACTURING COMPANY, Sheboygan Wisconsin 53083 (US)
(72) Inventor: Kovacs, Lloyd, Sheboygan, Wisconsin 53083 (US)
(74) Representative: Eyles, Christopher Thomas

(57) **Abstract**

Method of and apparatus for forming stacks of articles each comprising a first article stack on top of a second article and feeding the stacks forward wherein articles to be stacked are fed forward generally continuously one after another in series in a generally horizontal path at a predetermined level with the articles at spaced apart intervals along said path, the first of two successive articles in the series is picked up in synchronous relationship with the articles being fed forward and transported to a position above said level for placement of the first article on top of the second of the two successive articles as the second article continues to move forward at said level, and the first article is placed on top of the second as the second continues to move forward at said level for accumulation of the two articles in a stack comprising the first article on top of the second article.

## Description

### Brief Summary of the Invention

This invention relates generally to a method of and apparatus for stacking articles, and more particularly to a method of and apparatus for forming stacks of articles, such as rolls of paper, and especially rolls of toilet tissue or paper toweling, for ensuing wrapping of the stacks.

The invention has been developed especially for the accumulation of stacks of rolls of paper such as toilet tissue and paper toweling into stacks, and ultimate delivery of stacks to wrapping apparatus of the type as disclosed in U.S. Patent No. 4,430,844 of Robert C. James, issued February 14, 1984 to Hayssen Manufacturing Company of Sheboygan, Wisconsin, entitled Method of and Apparatus for Wrapping Articles. Wrapping apparatus of this type has been used for some years for wrapping rolls of paper (toilet tissue and household toweling) in both single roll and multiple roll configurations, generally in what is referred to as a "cores down" single level configuration. A "cores down" configuration is the configuration resulting from passage of the rolls through the wrapping machine as illustrated in said James U. S. patent with the cores of the rolls (the axes of the rolls) horizontal (as opposed to passing through the apparatus with the cores vertical, i.e. "cores up"). Rolls wrapped in this manner are currently widely sold in one roll, two roll, three roll, four roll, six roll, nine roll, twelve roll and sixteen roll packages. Market demand, particularly in Europe, has caused the package configuration to go from "cores down" to "cores up", and there is also a trend to go to more rolls in a single package to form what are referred to as "family packs".

Packages with more rolls in a single level "cores down" configuration have been marketed, but present a problem in that the packages being of increased length and width are somewhat unstable. Also, they are difficult to stack on store shelves and difficult for the customer to handle and store in the home. The problems arising from packaging more rolls in a single level "cores down" configuration may be avoided by packaging stacks of rolls, e.g. by adding a second layer of rolls for double the number of rolls, without substantially changing the dimensional stability of the package, the package also being capable of being stored in less space and in a more convenient manner and using less packaging material than packages of similar numbers of rolls in the single level format.

Reference may be made to U.S. Patent No. 4,679,379 entitled Automatic Bundling Apparatus issued July 14, 1987 showing apparatus for forming stacks of rolls and packaging the stacks by feeding a plurality of rolls in side-by-side relation forward in a plurality of lanes to accumulate a plurality of rolls side-by-side in a row against a plurality of stops which act as sensors, then raising the row straight up by means of an elevator which pushes the row up between a pair of resilient supports, lowering the elevator leaving the row on the supports, repeating these steps until a stack of the desired number of rows is completed, then pushing the stack into a so-called transfer unit. Mention may be made of another type of prior art apparatus in which rolls in side-by-side relation are fed forward asynchronously against a stop plate in random fashion to accumulate a plurality of articles side-by-side in a row, pushing the row horizontally onto a flight conveyor in timed relation thereto and repeating the cycle to accumulate the number of rows desired for the final bundle of articles. Operation of such prior apparatus involves a series of intermittent motions, e.g. the motion of the elevator in the one case and the motion of the pusher in the other case, which may be undesirable in many instances. Also, the speed differential of the individual incoming articles with respect to that of the accumulation of articles is a function of the accumulation configuration. Thus, for example, in the case of a three by four configuration, it takes twelve individual articles to create one accumulated configuration. As to configurations with large numbers of articles, there is generally sufficient time for this to be accomplished, but as to configurations with smaller numbers of articles, e.g. a one by two configuration, the intermittent motions coupled with the time wasted during the retraction of the pusher generally causes a severe speed limitation.

Among the several objects of this invention may be noted the provision of a method of and apparatus for efficiently forming stacks of the articles, e.g. rolls of toilet tissue or rolls of paper toweling, and feeding the stacks forward one after another for subsequent operations, e.g. accumulation of stacks and wrapping of the accumulation of stacks by means of wrapping apparatus of the type disclosed in the aforementioned U. S. Patent No. 4,430,844, and forming and feeding the stacks at a relatively high rate to maintain a high rate of production of packages; the provision of such a method and apparatus for operations with continuous motions as distinguished from intermittent motions; the provision of such a method and apparatus wherein delivery of articles to a stacker is efficiently synchronized with discharge of stacks formed from the articles, the provision of such apparatus in which the articles are handled gently and in a manner such as to avoid their tipping over or being displaced; the provision of such apparatus adapted for formation of stacks with a double level grouping in various configurations and readily convertible for single level type operation, without stacking, with a minimum of changeover time and/or change parts; and the provision of apparatus such as described which is readily programmable for forming stacks of various configurations.

In general, the method of this invention broadly comprises feeding forward articles to be stacked generally continuously one after another in series in a generally horizontal path at a predetermined level with the articles at spaced apart intervals along said path, picking up the first of two successive articles in said series and in synchronous relationship with the articles being fed forward and transporting said first article to a position above said level for placement of said first article on top of the second of the two successive articles as the second article continues to move forward at said level, placing the first article on top of the second as the second continues to move forward at said level for the accumulation of the two articles in a stack comprising the first article on top of the second, and delivering the said stacks forward one after another at timed intervals,

In general, apparatus of this invention comprises means for feeding forward articles to be stacked generally continuously one after another in series in a generally horizontal path at a predetermined level with the articles at spaced apart intervals along said path, transport or means for picking up the first of two successive articles of the series in synchronous relationship with the articles being fed forward and transporting said first article to a position above said level for placement of said first article on top of the second, the feeding means continuing to move the second of the two successive articles forward at said level and said second article coming underneath the first for the accumulation of the two articles in a stack comprising the first on of the second.

Other objects and features of the present invention will be in part apparent and in part pointed out hereafter.

### Brief Description of the Drawings

Fig. 1 is a schematic side elevation illustrating the apparatus and method of this invention as utilized for accumulating "cores up" rolls of toilet tissue into stacks and feeding the stacks forward at timed intervals;
Fig. 2 is a plan of Fig. 1;
Fig 2A is an enlarged fragment of Fig. 2, further showing a wrapper for the stacks;
Fig. 3 is a view similar to Fig. 1 illustrating the apparatus and method of this invention as utilized for accumulating "cores down" rolls of paper toweling into stacks and feeding the stacks forward at timed intervals;
Fig. 4 is a view similar to Figs. 1 and 3 illustrating the apparatus as utilized for feeding rolls of toilet tissue without stacking of the rolls;
Fig. 5 is a view in side elevation of the stacker of the apparatus;
Fig. 6 is a view in end elevation of the stacker;
Fig. 7 is a vertical longitudinal section on line 7--7 of Fig. 6;
Fig. 8 is a vertical transverse section on line 8--8 of Fig. 2, showing rolls of toilet tissue being stacked "cores up";
Fig. 9 is a view similar to Fig. 8 showing rolls of paper toweling being stacked "cores down";
Fig. 9A is a view similar to Fig. 9 showing a modification;

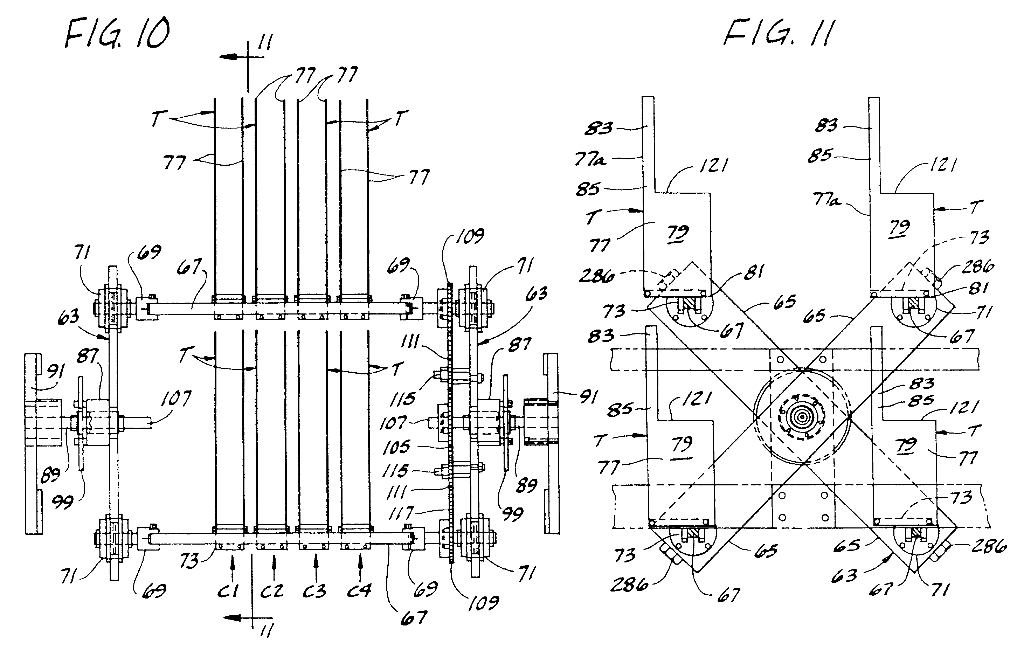

Fig. 10 is a view showing a stacker wheel of the apparatus and transporters carried thereby;

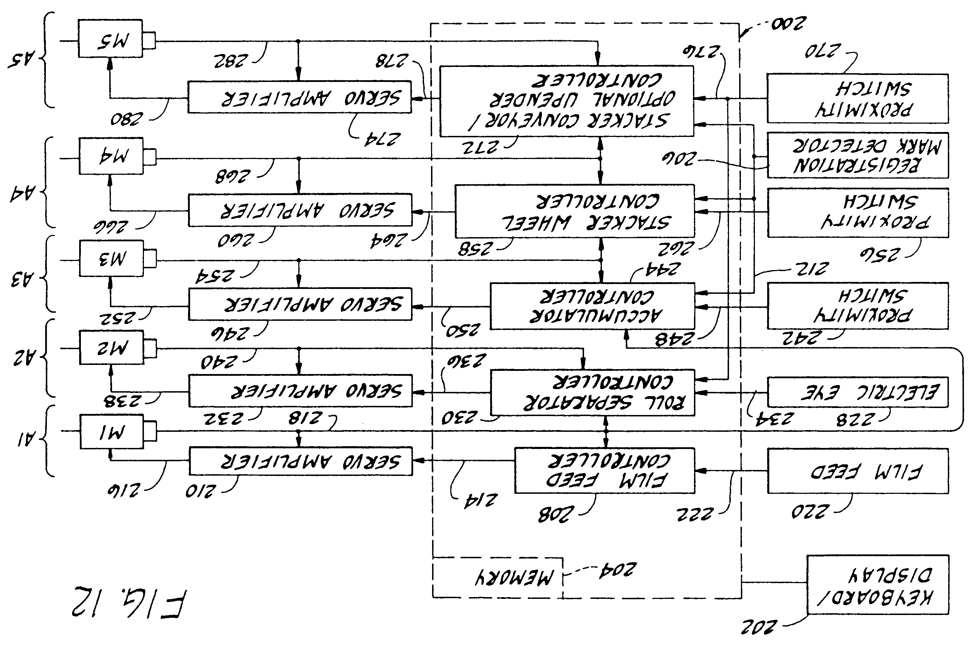

Fig. 11 is a section on line 11--11 of Fig. 10 showing the transporters;
Fig. 12 is a diagram showing electrical components of the apparatus;
Fig. 13a-r are schematic views showing the sequence of positions of parts of the apparatus and rows of rolls of toilet tissue with the rows stacked in two-high configuration and the cores of the rolls vertical ("cores up" configura- tion); Fig. 13a being on a larger scale than the remainder;
Figs. 14a-14j are schematic views showing the sequence of positions of parts of the apparatus and rows of rolls of paper toweling with the rows stacked in two-high configuration and the cores of the rolls horizontal ("cores down" configuration);
Fig. 15 is a view showing a modification of a transporter; and
Fig. 16 is a view showing a modification with two rows of rolls being carried by a transporter.

Corresponding reference characters indicate corresponding parts throughout the drawings.

### Detailed Description

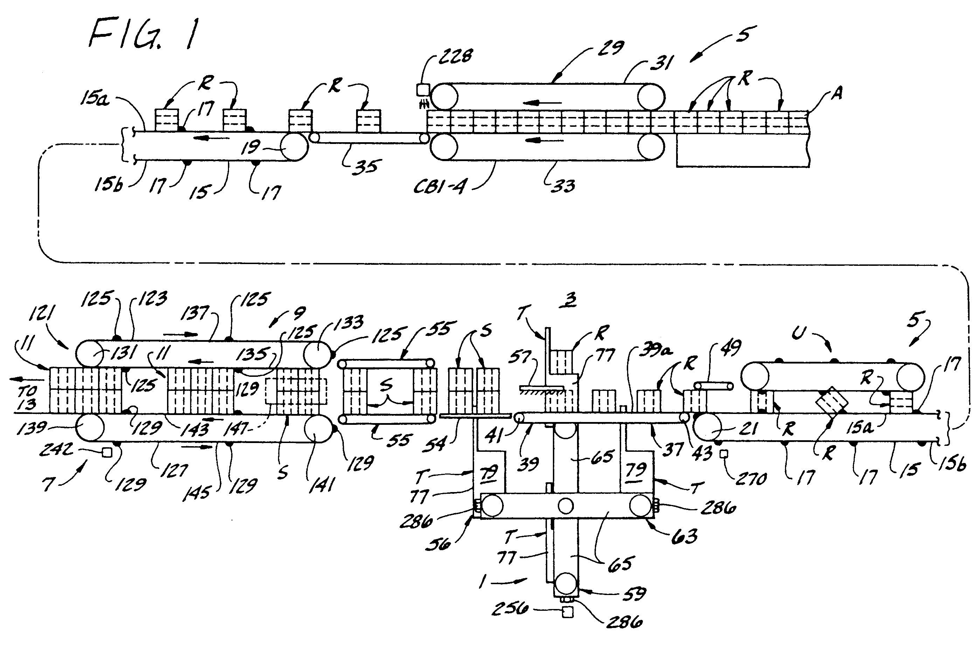

The method and apparatus of this invention have been developed particularly for stacking rolls of paper, and especially rolls of toilet tissue and rolls of paper toweling, for subsequent packaging of the stacks by wrapping them in a plastic film wrapper. It is to be understood, however that, in a broad context, the method and apparatus may be adapted for stacking articles other than rolls of paper, e.g. cartons and cans. Referring first more particularly to Fig. 1, apparatus of this invention for carrying out the method of this invention is shown to comprise a stacker indicated in its entirety by the reference numeral 1 at a stacking station 3 which receives articles generally designated A, more particularly rolls of paper, from an article (roll) infeed system 5 upstream of the stacker. The stacker forms (accumulates) a plurality of the articles (rolls) into stacks S, and delivers the stacks S one after another at timed intervals to downstream equipment 7, herein illustrated as comprising an accumulator 9, which functions to accumulate a number of the stacks formed by the stacker 1 into a larger stack such as indicated at 11. The larger stacks 11 are delivered to wrapping apparatus indicated at 13 downstream from the accumulator 9 for wrapping them. The wrapping apparatus may be of the type shown in the aforesaid U. S. patent No. 4,430,894. Following the wrapping operation, the wrapped stacks 11 may be fed through apparatus of the type described in the copending coassigned U.S. Patent application Serial No. 07/782,513 filed October 25, 1991, entitled Method of and Apparatus for Making Packages, for sealing the ends of the wrapper.

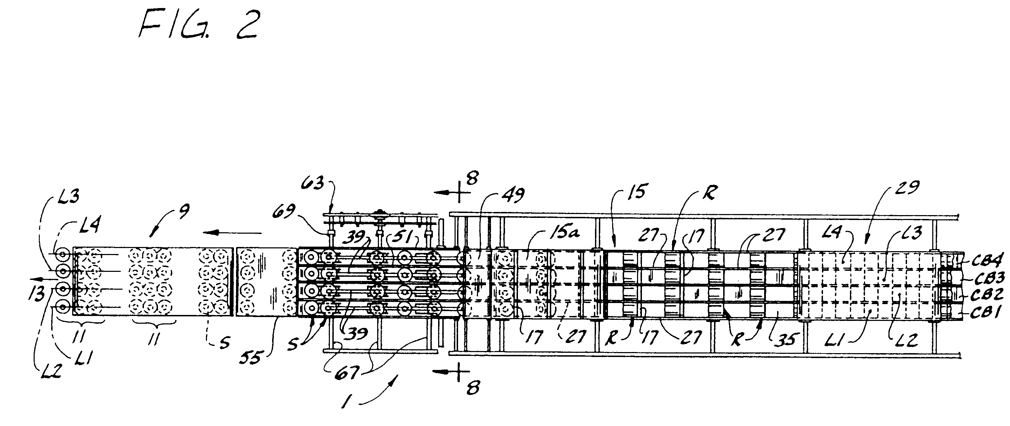

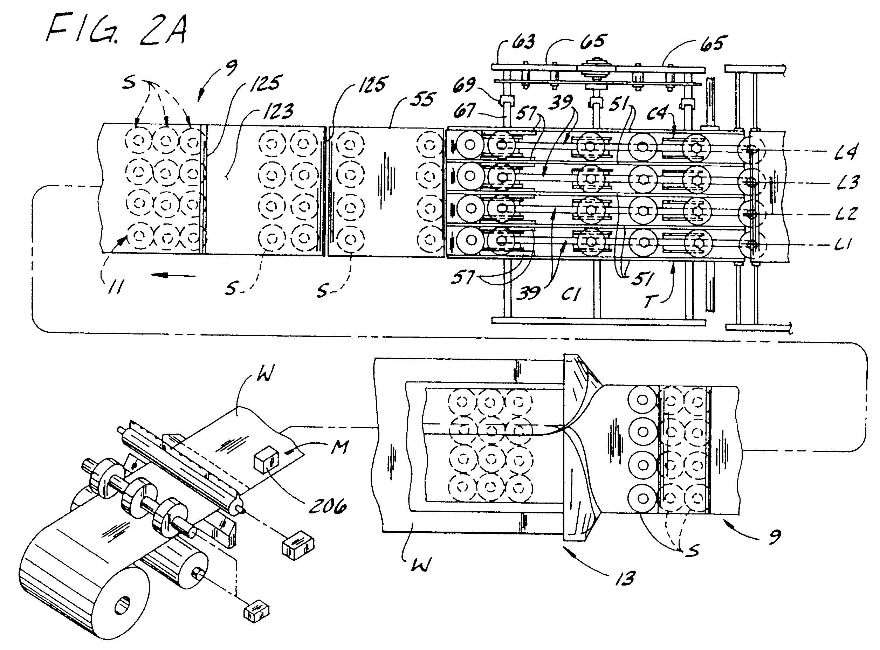

The infeed system 5 includes a flight conveyor comprising an endless belt 15 having flights 17 spaced at equal intervals along its length, the belt being trained around rolls 19 and 21 to have an upper generally horizontal reach 15a and a lower return reach 15b. The belt 15 is continuously driven at a selected speed for forward travel of its upper reach 15a from right to left as viewed in Fig. 1 toward the stacker 1. The belt is of such width as to be capable of accomodating multiple rolls A in side-by-side relation thereon in a row R extending transversely with respect to the belt. The configuration is shown as a four-roll system, with four rolls in the row lying on the upper reach 15a of the belt 15 and being fed forward by the belt in four side-by-side lanes as indicated at L1-L4 in Fig. 2. The configuration could, in fact, be any suitable number "M" of lanes wide. The flights 17 are spaced at intervals such as to accomodate rolls A of paper toweling extending lengthwise of the upper reach of the belt, thereby also accomodating rolls of toilet tissue (of shorter length than rolls of paper toweling). Rolls A may be fed forward in all four lanes L1-L4 to form four-roll rows R as shown in Fig. 2, or in three lanes to form three-roll rows, or in two lanes to form two-roll rows, or in one lane. Partitions on the upper reach 15a of belt 15 defining the four lanes L1-L4 are indicated at 27.

The infeed system 5 further comprises means for delivering rows R of rolls A at timed intervals onto the upper reach 15a of flight conveyor 15 including a choke belt conveyor system 29 comprising four choke belt conveyors CB1-CB4 arranged side-by-side in the four lanes L1-L4. Each of these choke belt conveyors comprises upper and lower belts 31 and 33 which receive rolls A in "cores down" (cores horizontal) relation from the roll production line, the rolls extending end-to-end. The choke belt conveyors are operable to deliver a single row R of rolls A, comprising two, three or four rolls in two, three or four of the lanes, as may be desired. It may also be operable to deliver single rolls A in one lane. Each row R of rolls delivered by the choke belts is fed onto the upper reach of a conveyor 35 intermediate the choke belt conveyors and the flight conveyor 15 for feeding the row of rolls to the flight conveyor in timed relation to the flight conveyor such that each row of rolls is delivered onto the upper reach 15a of the flight conveyor in position to be engaged by an oncoming flight 17 of flight conveyor 15, the rows thereby being spaced at equal intervals on the flight conveyor corresponding to the spacing of the flights 17. As illustrated in Figs. 1 and 2, rolls A of toilet tissue are fed to the flight conveyor in "cores down" (cores horizontal) position. As they travel forward, from right to left, as illustrated in Fig. 1, they are upended to "cores up" (cores vertical) position by an upending apparatus indicated schematically at U in Fig. 1, such as that shown in the copending coassigned U.S. Patent application Serial No. 969,752 filed October 30, 1992 entitled Continuous Motion Upender.

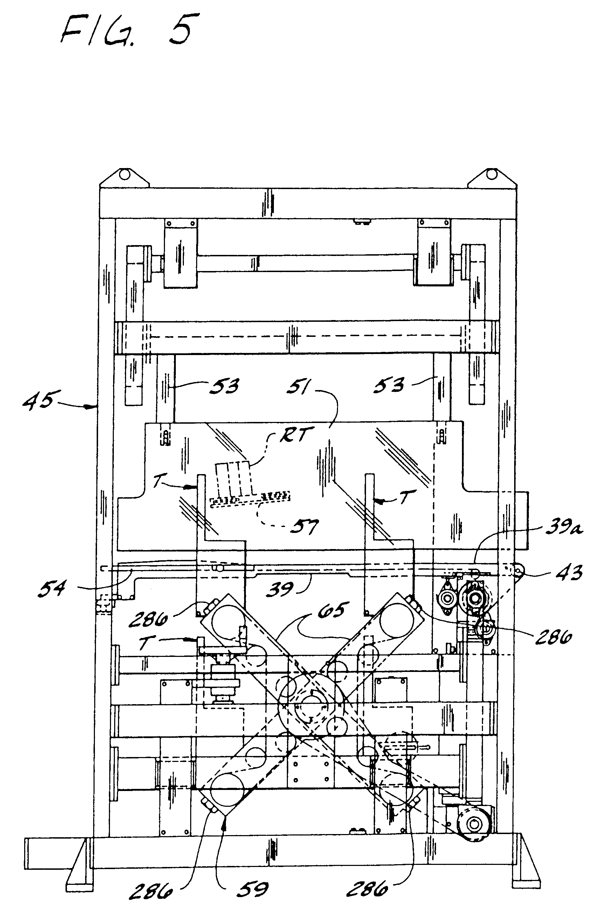

The stacker 1 comprises means indicated in its entirety by the reference numeral 37 for continuously feeding rolls A therethrough in a horizontal path generally at the level of rolls A on the upper reach 15a of flight conveyor 15. With the latter providing for feeding rolls A in four lanes L1-L4, means 37 comprises four relatively narrow endless belts, one for each of the four lanes L1-L4 and in continuation of the lanes L1-L4, each of these narrow belts being designated 39 and shown as trained around rolls 41 and 43 mounted in a frame generally designated 45 to have generally horizontal reaches 39a generally coplanar with the upper reach 15a of the flight conveyor 15 so that rolls A are fed through the stacker generally at the same level as they are fed forward by the flight conveyor. The stacker belts are continuously driven in timed relation to the flight conveyor 15 for forward travel of rows R of rolls (travel from right to left as viewed in Fig. 1) on the upper reaches 39a of the four belts 39. Rows R of rolls A, received from the infeed conveyor 15, are fed forward by belts 39 with the rows spaced at equal intervals. The upstream ends of the upper reaches 39a of the stacker belts 39 are located closely adjacent the downstream end of the upper reach 15a of the infeed conveyor 15 for smooth passage of the rows R from the downstream end of the upper reach of the conveyor 15 onto the upstream ends of the upper reaches 39a of the four stacker belts 39. At the downstream end of the infeed conveyor 15 is a hold-down belt 49 which keeps the rolls oriented in the transition from the upender to the stacker belt 39. Partitions for the four stacker belt systems and the four lanes L1-L4 are indicated at 51 mounted as indicated at 53 (see Figs. 2 and 5). At the downstream end of the stacker belts is a dead plate 54 suitably mounted in the stacker frame. Each stacker belt 39 and each dead plate 54 extends between two adjacent partitions 51, the latter being spaced a distance slightly greater than the diameter of rolls A to be handled. The dead plates 54 are located between the downstream ends of the upper reaches 39a of the stacker belts 39 and the upstream end of a choke belt conveyor 55 for delivering rows R to the accumulator.

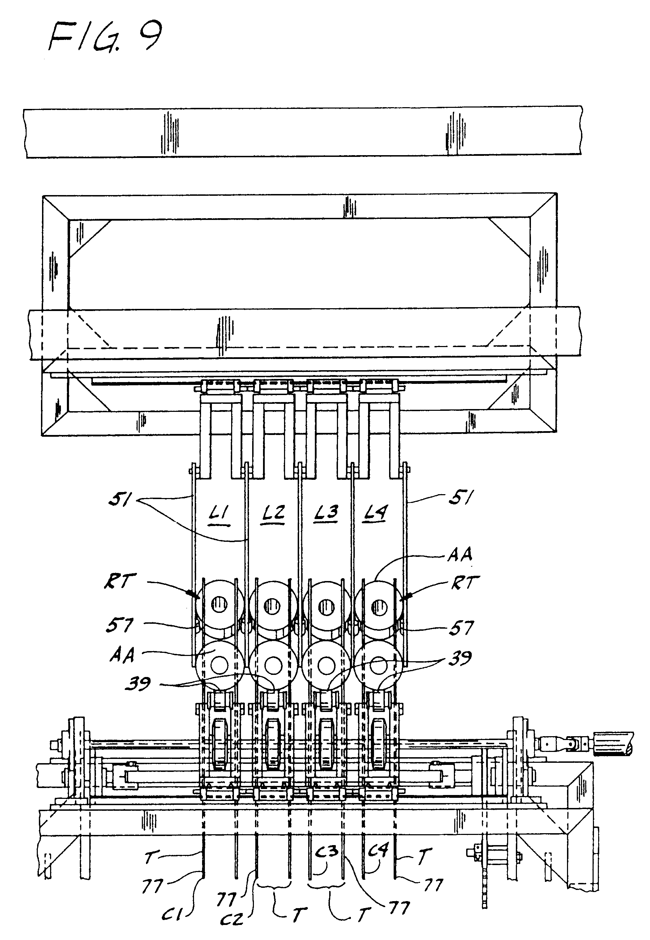

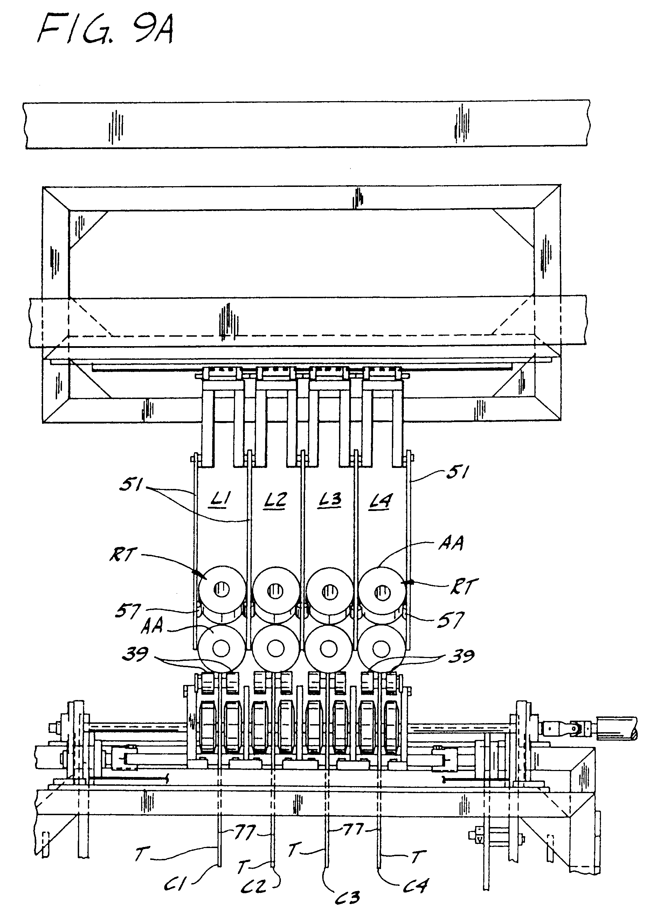

The stacker 1 includes transport means indicated generally at 56 comprising four rotary sets C1-C4 of roll carrier and stack pusher members each indicated in its entirety by the general reference character T, one set for each of the four lanes L1-L4. These members T are hereinafter referred to as transporters. As shown in Fig. 1, there are four transporters T in each of the four sets C1-C4, each movable continuously in a circular path in the respective lane for picking up the first of two successive rows R of rolls A in the series of rows which are fed forward on the four stacker belts 39 and moving this row forward to a raised transfer position indicated at RT above the level of the horizontal path of travel of rows R on the stacker belts 39 for forward feed of the second of the two successive rows of rolls in said path underneath the first for the accumulation of the two rows into the stacks S each comprising a first row on top of a second, and for delivering the stacks forward to the accumulator 9. The rolls in the rows are transversely supported and held up in the stated raised transfer position RT by means comprising four pairs of roll supporting rails 57, one pair for each lane (Fig. 9). The rails of each pair are mounted on the partitions 51 extending longitudinally of the apparatus above the horizontal path of travel of rows R through the stacker at opposite sides of the vertical planes through the side edges of the stacker belts.

An alternative arrangement is illustrated in Figure 9A. This alternative utilizes two transfer belts 39 per lane with one transporter plate located between the belts. In this arrangement, the roll is guided by the partitions between the lanes 51 when it is lifted by the transporter plate C1-C4. This design has only one transporter plate per lane which simplifies the mechanics of the stacker mechanism. The profile of the single transporter plate is identical to that of the dual model.

The transporter(s) are carried by a wheel 59 continuously rotary in a counterclockwise direction as viewed in Figs. 1, 5, and 7 on a horizontal axis extending transversely to and below the path of travel of the rows R running at constant velocity or variable velocity through an indexing gearbox, or with a servo motor operating with a preprogrammed accelerationn/deceleration profile. The wheel comprises left-hand and right-hand members each generally designated 63 each constituted by a spider having four arms 65 extending radially outward from the wheel axis. The four arms of each spider are spaced at 90° intervals around the wheel axis. Each arm 65 of the spider on one side is paired with, i.e. in the same radial plane as, the corresponding arm 65 of the spider at the other side.

The wheel 59 carries four cross-shafts each designated 67 and each extending between the ends of the two arms 65 of each pair of arms. Each cross-shaft 67 has its ends detachably mounted in couplings as indicated at 69 each journalled for rotation relative to the arms in bearings 71 in the arms. The four shafts 67 are spaced at 90° intervals around the wheel axis. Four transporters T are mounted in a row in side-by-side relation on each of the shafts in the vertical planes of the four lanes L1-L4 and between the partitions 51. Each of the transporters comprises a hub 73 secured on the respective shaft 67 and a pair of side plates each designated 77 fastened to the ends of the hub. Here it will be understood that each transporter may comprise a single plate as in Fig. 9A. Each side plate has a rectangular base portion 79 fastened adjacent its lower end to the respective end of the hub. The shaft 67 is located adjacent the upstream lower corner 81 of the base portion. Each side plate also has a relatively narrow finger 83 extending up from the base portion at the downstream upper corner 85 of the base portion. Each hub is somewhat longer than the width of a stacker belt 39, and the two side plates of each transporter are spaced laterally a distance somewhat greater than the width of a stacker belt 39, and less than the spacing of the partitions 51 for the two plate model.

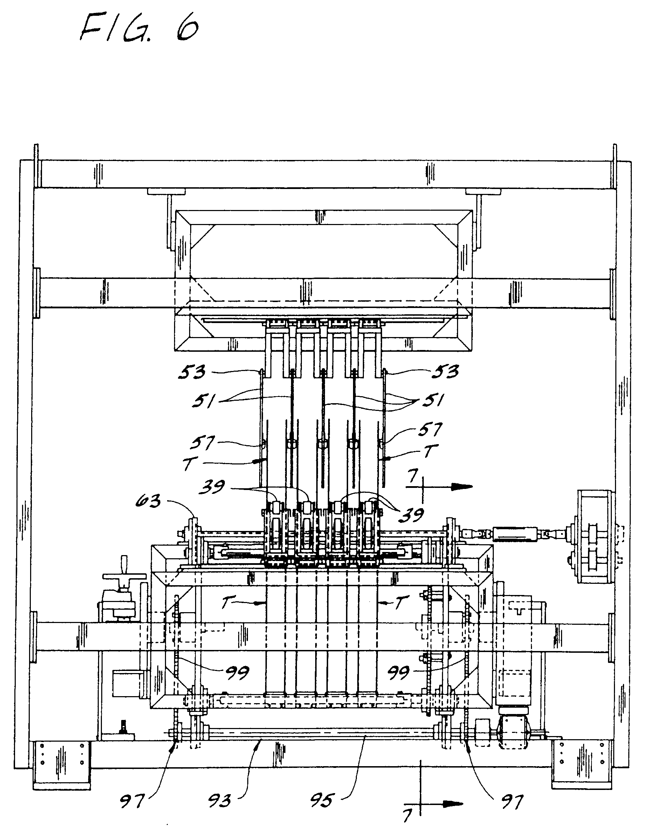

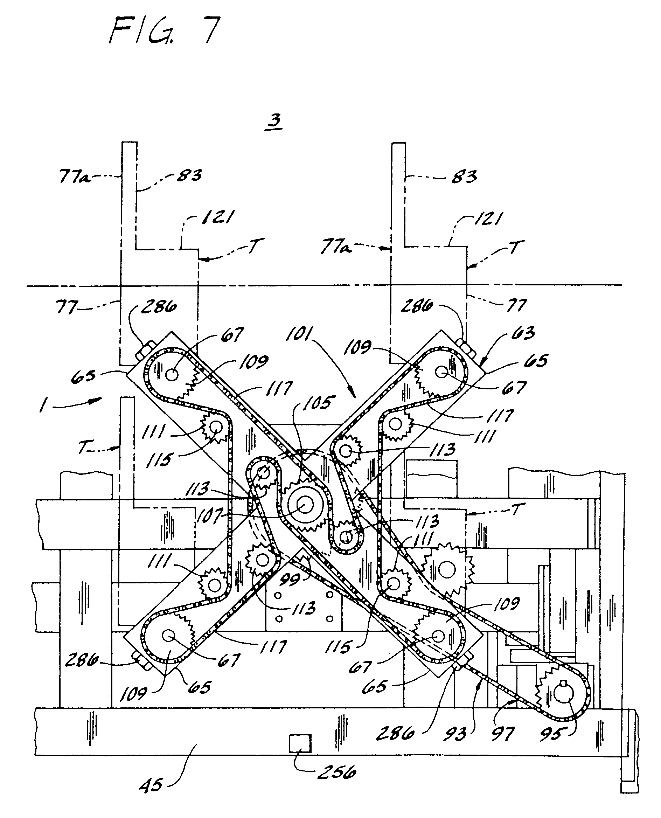

Each wheel spider 63 has a central hub 87 rotary on a stub shaft 89 extending inwardly from a part 91 of the frame of the apparatus. Drive means 93 for driving the wheel in counterclockwise direction as viewed in Figs. 1, 6 and 7 is shown to comprise a drive shaft 95 and chain and sprocket drives each indicated at 97, and including sprocket 99 on each wheel hub 85. In the operation of the apparatus, the wheel is continuously driven, and carries the transporters T through an endless circular path. As the wheel rotates, the transporters are maintained in an upright position with their base portions down and fingers 83 extending vertically upward by means indicated generally at 101 (Fig. 7) for rotating the transporter shafts 67 relative to the arms 65 of the wheel as the shafts move around in a circle with the wheel. As shown in Figs 6 and 7, this means 101 comprises a chain and sprocket drive mechanism including a central sprocket 105 mounted on a shaft 107 extending inwardly on the axis of the wheel from the right-hand spider of the wheel, sprockets 109 carried by the right-hand couplings 67, sprockets 111 and 113 on shafts 115 extending inwardly from each of the radial arms 65 of the right-hand spider, and a chain 117 trained about these sprockets, the arrangement being such that as the wheel rotates, the chain 117 is driven by the sprocket 105 to move relative to the wheel and thereby drive sprockets 109 relative to the wheel and rotate the shafts 67 relative to the wheel to maintain the requisite upright orientation of the transporters.

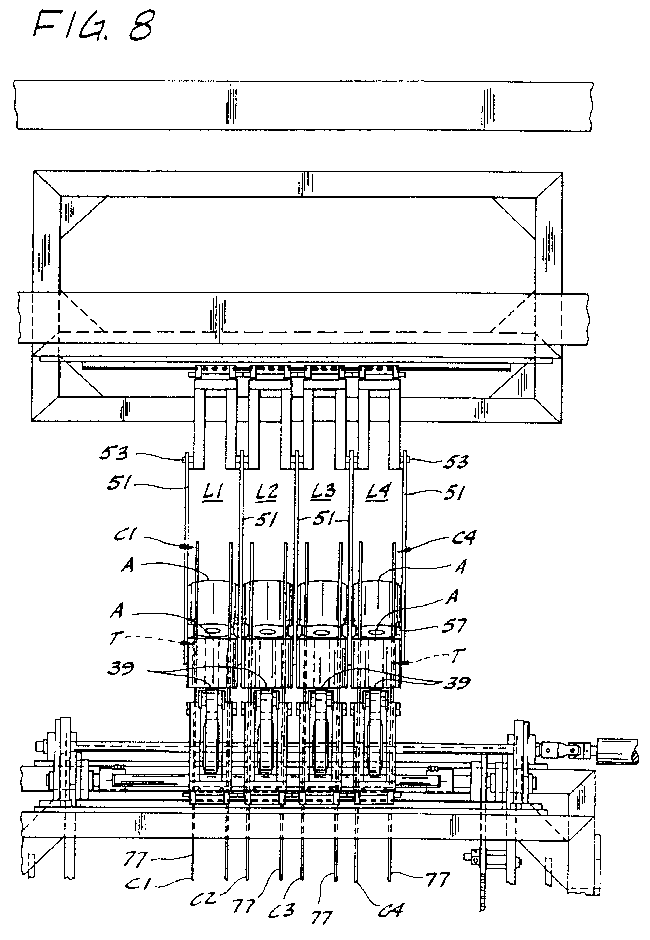

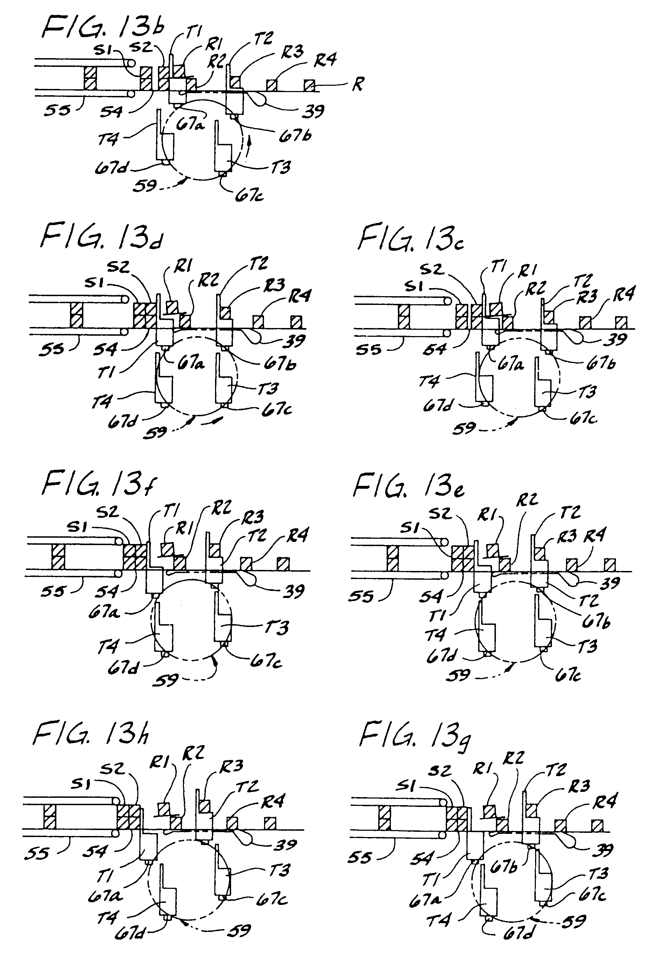

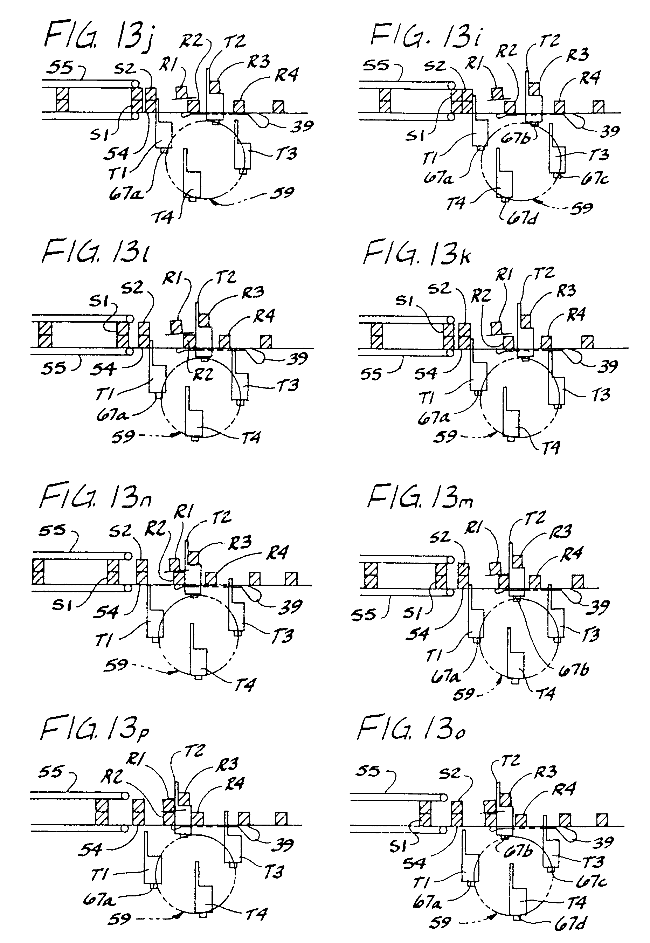

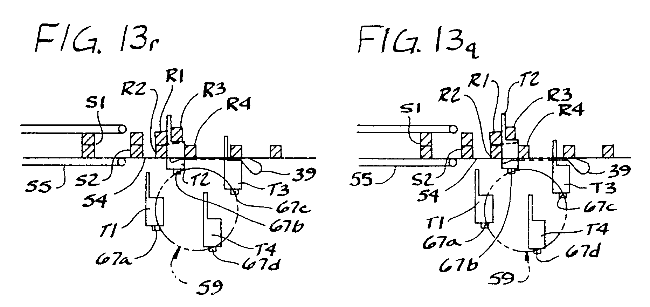

The axis of the wheel is located at such an elevation relative to the stacker belts 39 that, as the wheel 59 rotates, the hubs 73 of the transporters T carried by the shafts 67 pass under the lower return reaches of the stacker belts. The two side plates 77 (Fig. 8) of each transporter T travel in a circular path in vertical planes at opposite sides of the respective stacker belt 39, the arrangement and operation being such that as the two side plates of each transporter travel upward through the upstream half of their circular path of travel, they not only rise up but also move forward on opposite sides of the respective stacker belt (Fig. 13a), and as the transporter continues its travel through the downstream half of its circular path it travels forward and down, and then further down and rearward to repeat its one-revolution cycle of operation. As the base portions 79 of each transporter come up above the upper reach 39a of the respective stacker belt 39 at the pickup point P, the base portions pick up and elevate a row of rolls R which has been brought into position for such pick-up by the stacker belts, then moves that row forward and, as the base portions of the transporters move forward and down from their peak position, they deposit that row on a respective pair of rails 57 in the raised transfer position RT elevated above the horizontal path of travel of rolls on the upper reaches 39a of the stacker belts 39 and located downstream from the roll pick-up point or station indicated at P where the base portions of the transporters come up above the stacker belts and lift the row R off the belts. If the rolls are in cores-up position on the belts, each roll is picked up by engagement of the upper edges 121 of the base portions with the lower end of the roll as shown in Fig. 13A. If the rolls are in cores-down position on the belts 39, each roll, as picked up by a transporter, is cradled in the base portions 79 of the two side plates 77 of the transporter, bearing on the upper edges 121 of the base portion as shown in Fig. 13A. The timing of operation is such that the upper ends of the upwardly extending fingers 83 of each transporter breaks the horizontal plane of the upper reach 39a of the respective stacker belt 39 as the space between two successive rows passes through the pick-up station P. The transporters, moving upward, pick up the rolls in the row (lifting the rolls up on the upper edges 121 of the base portions 79 of the two side plates of the transporters) and, in addition to lifting the row of rolls, carries the row forward and then down to deposit the rolls in the row on the respective pair of rails 57 in the raised transfer position RT.

As illustrated in Fig. 1, the accumulator 9 comprises a conveyor generally designated 121 comprising an upper belt 123 having flights 125 thereon and a lower belt 127 having flights 129 thereon. The upper belt 123 is trained around rolls 131 and 133 to have a forwardly moving lower reach 135 and an upper return reach 137. The lower belt is trained around rolls 139 and 141 to have a forwardly moving upper reach 143 and a lower return reach 145. The flights 125 and 129 are spaced along the belts at intervals such as to accomodate stacks 11 of the maximum number of stacks S desired, e.g. three stacks S. The upstream end of the accumulator conveyor 121 is located closely adjacent the downstream end of the conveyor 55 with the upper reach 143 of the lower belt 127 generally flush with the upper reach of the lower belt of conveyor 55, and flush with the dead plates 54. The belts 123 and 127 are so phased one with respect to the other that each flight 125 on the upper belt travels directly above a corresponding flight 129 on the lower belt as the flights move forward with the lower reach of the upper belt and the upper reach of the lower belt. The belts 123 and 127 of the conveyor 121 are driven in such timed relation to the conveyor 55 that the number of stacks S desired for each larger stack (e.g. three stacks S) is accumulated in the accumulator downstream from a pair of flights 125 and 129 as this pair travels with the upper and lower belts around the upstream rolls 133 and 141 and thence forward, the accumulation being engaged at its upstream side by the flights and conveyed forward. Means such as indicated at 147 is provided for retarding the forward movement of the first stack of the number of stacks which are to form a larger stack 11 so that the second stack following the first comes into engagement with the first and the third comes into engagement with the second, until the three stacks are engaged by the flights and thereby moved forward. Stacks 11 exit from the accumulator onto a conveyor 149 which conveys them one after another to the wrapping apparatus 13 (see Fig. 2A). It will be understood that accumulator systems such as are well-known in the art may be used instead of that indicated at 9.

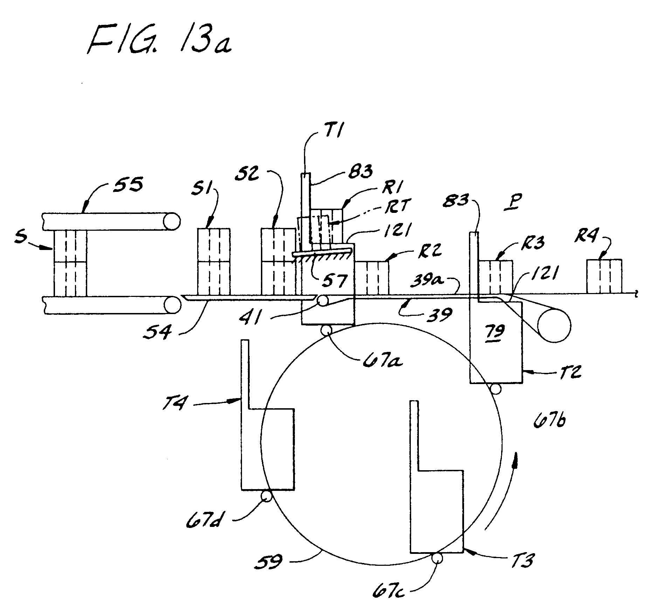

A controller shown within dashed line 200 in Fig. 12 controls the timing of the stacker 1 and related conveyors shown in Fig. 1. Controller 200 may be any commercially available machine controller. For example, controller 200 may be a Bam-832 Machine Controller sold by Berkeley Process Control, Inc. using an Opto-22 Pamux interface. The Bam-832 Controller is a self-contained processor which handles motion control and input/output functions. It includes serial communication ports for communication with other data collection systems and for the connection of a user interface such as a keyboard/display 202. Keyboard 202 provides a display and a touch screen for inputting data and other operating parameters and for displaying data regarding operating conditions. Controller 200 also includes a memory 204 for storing and retrieving operating parameters and other data. Controller 200 further includes a number of dedicated input devices and industrial input/output devices. The dedicated input devices are handled by controller interrupts and provide fast response for motion control commands. The industrial I/O devices provide slower response times and are used to interface elements such as proximity switches where fast response time is not required. Controller 200 also has an interface for handling a number of analog I/O points attached to the same industrial I/O system.

The BAM-832 Controller provides eight controller channels which are used in control axes, A1 through A8. As shown in Fig. 12, five of the controller channels are used in separate closed loop control axes A1 through A5. Each such closed loop control axis includes a -10 to +10 volt analog controller channel of controller 200, a servo amplifier for energizing a motor for driving the apparatus being controlled by the axis, and an encoder on the motor for generating feedback pulses related to the actual rotational velocity and direction of the motor. The feedback pulses are transmitted via a closed loop path back to the controller and the servo amplifier for use in controlling the speed and timing of the motor. Each control axis is also connected to at least one external reference signal generator (e.g. a detector, electric eye, or proximity switch) for sensing a physical position of the apparatus being controlled. Fig. 12 shows the connections between and among control axes A1 through A5 which are used for reference in synchronizing their overall operation. It will be noted that control axis A1 is the master axis which sends timing signals to the other axes for synchronizing the operation of the overall system.

As shown in Fig. 12, control axes A1 through A5 control motors M1 through M5, respectively. Motor M1 drives the film feed roll of wrapping apparatus 13 (see the aforesaid U.S. Patent No. 4,430,844); motor M2 drives the choke belt conveyor system 29; motor M3 drives the accumulator 9, stacker belts 39, and conveyor 55; motor M4 drives stacker wheel 59; and motor M5 drives flight conveyor 15 and conveyor 35. The three remaining control axes A6 through A8 and the additional input/output channels of controller 200 are used to control other components (not shown) of the packaging system in which the present stacker apparatus is used.

More particularly, control axis A1 is a closed loop control system which includes a film feed controller 208, a servo amplifier 210 and the encoder on motor M1. Motor M1 is energized by servo amplifier 210 via lines 216. Controller 208 controls servo amplifier 210 via a line 214. Lines 218 provide pulses from the encoder on motor M1 to controller 208 and servo amplifier 210. The pulses correspond to the actual velocity and direction of motor M1. Controller 208 thereby controls the operation of motor M1. Controller 208 is also connected to a film feed circuit 220 via a line 222. Circuit 220 outputs a signal to set the rate at which the web W is to be unwound in wrapping apparatus 13. Controller 208 receives the signal from circuit 220 and is programmed with data to calculate a corresponding speed of motor M1 as a function of the signal for unwinding web W at the desired rate. Controller 208 then controls motor M1 to operate at the calculated speed. The faster web W is to be unwound, the faster motor M1 must rotate. Likewise, the slower web W is to be unwound, the slower motor M1 must rotate. It will be noted that the desired rate for unwinding web W may change over time during operation of the present system as indicated by changes in the signal from circuit 220. Control axis A1 responds to such desired changes by appropriately changing the speed of motor M1 during such operation.

Control axis A2 is a closed loop control system which controls motor M2 to drive the upper and lower belts 31 of choke belt conveyor system 29 at the same speed via a pulley and drive belt (not shown). Axis A2 includes a roll separator controller 230, a servo amplifier 232 and the encoder on motor M2. Motor M2 is energized by servo amplifier 232 via lines 238. Controller 230 controls servo amplifier 232 via a line 236. Lines 240 provide pulses from the encoder on motor M2 to controller 230 and servo amplifier 232. The pulses correspond to the actual velocity and direction of motor M2. Controller 230 thereby controls the operation of motor M2.

Controller 230 is also connected to an electric eye 228 via a line 234 and to a proximity switch 270 via a line 276. As shown in Fig. 1, eye 228 is positioned above the outlet of conveyor system 29. Each time eye 228 detects the leading edge of a roll A as it is being output from conveyor system 29, eye 228 sends a reference signal via line 234 to controller 230. Proximity switch 270 is positioned adjacent the path of flights 17 in conveyor 15. Each time a flight 17 passes by, switch 270 senses the ferrous material in the flights and sends a reference signal via line 276 to controller 230. Controller 230 is programmed with data to calculate the position of rolls A output from conveyor system 29 as a function of the reference signal on line 234 and to calculate the position of flights 17 in conveyor 15 as a function of the reference signal on line 276.

Controller 230 also receives the pulses emitted by the encoder on motor M1 via lines 218. Controller 230 is programmed with the total number of pulses emitted during one wrapping cycle of wrapping apparatus 13. By counting the pulses during a wrapping cycle, controller 230 knows the extent to which wrapping apparatus 13 has completed the cycle. Because conveyor 15 also uses a timing signal based on the pulses emitted from the encoder on motor M1 (as explained below), the pulse count enables controller 230 to synchronize the operation of conveyor system 29 to the operation of flight conveyor 15. Because controller 230 now knows the position of rolls A output from conveyor system 29, the position of flights 17, and the pulse count from the encoder on motor M1, controller 230 controls motor M2 so that rolls A are separated one roll per lane L1-L4 in spaced relation corresponding to the spacing of flights 17. Accordingly, each roll A is delivered to flight conveyor 15 before the next appearing flight 17 comes into position to carry the roll A away. Controller 230 thus controls the motion of conveyor system 29 by controlling the velocity and position of motor M2 following detection of a roll A by eye 228 and following detection of a flight 17 by proximity switch 270.

Because the other control axes also receive a timing reference from the encoder on motor M1 via lines 218, the pulses on line 218 provide a central timing reference for coordinating the operation of conveyor system 29 in timed relation with wrapping apparatus 13, flight conveyor system 15 and with the other components of the present system. A further advantage of using the pulses on line 218 as a timing reference is that, as the packaging rate of wrapping apparatus 13 slows down, the throughput of conveyor system 29 correspondingly slows down while still maintaining the proper spaced relation between the rolls A and flights 17.

Control axis A3 is a closed loop control system which controls motor M3 to drive the upper and lower belts of accumulator 9 at the same speed via a pulley and drive belt (not shown). The four belts 39 and conveyor 55 are also driven by motor M3 via a suitable drive mechanism (not shown). The drive mechanism is preferably designed so that conveyor 55 is operated at a belt speed approximately one-half as fast as the speed of belts 39. Axis A3 includes an accumulator controller 244, a servo amplifier 246 and the encoder on motor M3. Motor M3 is energized by servo amplifier 246 via lines 252. Controller 244 controls servo amplifier 246 via a line 250. Lines 254 provide pulses from the encoder on motor M3 to controller 244 and servo amplifier 246. The pulses correspond to the actual velocity and direction of motor M3. Controller 244 thereby controls the operation of motor M3.

Controller 244 is also connected to a proximity switch 242 via a line 248 and to a registration mark detector 206 via a line 212. As shown in Fig. 1, switch 242 is positioned adjacent the path of flights 129 of accumulator 9. Each time a flight 129 passes by, switch 242 senses the ferrous material in the flight and sends a reference signal via line 248 to controller 244. Detector 206 is positioned in wrapping apparatus 13 over the path of the registration marks on web W. Each time a registration mark passes by, detector 206 sends a reference signal via line 212 to controller 244. Controller 244 is programmed with data to calculate the position of flights 129 of accumulator 9 as a function of the reference signal on line 248 and to calculate the position of the perforations in web W as a function of the reference signal on line 212.

Controller 244 also receives the pulses emitted by the encoder on motor M1 via line 218. Controller 244 is programmed with the total number of pulses emitted during one wrapping cycle of wrapping apparatus 13. By counting the pulses during a wrapping cycle, controller 244 knows the extent to which wrapping apparatus 13 has completed the cycle. This information enables controller 244 to synchronize the operation of the accumulator to the operation of wrapping apparatus 13. In addition, controller 244 is programmed with data for calculating the movement of web in through wrapping apparatus 13 as a function of the number of pulses counted following detection of a registration mark. Controller 244 thereby calculates the present position of the eye mark on web W based on how far web W has moved since the last registration mark was detected. Controller 244 is also programmed with data relating the revolutions of motor M3 to the movement of flights 129. Because controller 244 now knows the position of the eye mark on web W and of the flights 129, controller 244 controls motor M3 so that the flights 129 output stacks 11 in spaced relation to the perforations in web W for wrapping stacks 11. Accordingly, each stack 11 is delivered to wrapping apparatus 13 for positioning between the perforations in web W as determined by an axis (not shown) which perforates the film relative to the eye mark.

Controller 244 thus controls the motion of accumulator 9 by controlling the velocity and position of motor M3 following: detection of flights 129, detection of a registration mark on web W, and receipt and counting of the number of pulses received from the encoder on motor M1. Accumulator 9 is thereby controlled to accumulate a predetermined number of stacks S from stacker 1 and pass them to wrapping apparatus 13 for further processing. The ratio of the speed of accumulator 9 to the speed of the upstream equipment is a programmed value determined by the depth of product desired in flights 129 of accumulator 9. An advantage of using the pulses on line 218 as a timing reference is that, as the packaging rate of wrapping apparatus 13 changes, the throughput of accumulator 9 correspondingly changes while still enabling accumulator 9 to output the accumulated stacks 11 in the proper spaced relation between the perforations in web W.

Control axis A4 is a closed loop control system which controls motor M4 to drive stacker wheel 59. Axis A4 includes a stacker wheel controller 258, a servo amplifier 260 and the encoder on motor M4. Motor M4 is energized by servo amplifier 260 via lines 266. Controller 258 controls servo amplifier 260 via a line 264. Lines 268 provide pulses from the encoder on motor M4 to controller 258 and servo amplifier 260. The pulses correspond to the actual velocity and direction of motor M4. Controller 258 thereby controls the operation of motor M4.

Controller 258 is also connected to a proximity switch 256 via a line 262. As shown in Fig. 1, stacker wheel 59 includes a bolt 286 positioned in each arm 65 of the wheel to which transporters T are attached. No bolt is positioned in those arms 65, if any, to which no transporters T are attached. Switch 256 is positioned adjacent the path of the bolt heads 286 during rotation of stacker wheel 59. As the bolt heads pass by, switch 256 senses the ferrous material in the bolt heads and sends a reference signal via line 262 to controller 258. Controller 258 is programmed with data to calculate the position of arms 65 and, in particular, the position of transporters T, as a function of the reference signal on line 262. Controller 258 is also programmed with data for calculating the angular movement of arms 65 and the corresponding movement of transporters T as a function of the number of counts emitted by the encoder on motor M4. By counting the number of pulses emitted by the encoder on motor M4 following detection of a bolt head 286, controller 258 calculates the present position of arms 65 and transporters T based on the angle through which arms 65 have rotated since the last bolt head was detected. Controller 258 thus controls the movement of transporters T by controlling the number and timing of the revolutions of motor M4 following detection of bolt heads 258.

Controller 258 also receives the reference signal output by registration mark detector 206 via line 212 and the pulses emitted by the encoder on motor M3 via line 254. Controller 258 uses the reference signal from detector 206 for determining the position when a particular cycle of accumulator 9 begins. Controller 258 is programmed with the total number of pulses emitted by the encoder on motor M3 during one cycle of accumulator 9. By counting the pulses following receipt of the reference signal from detector 206, controller 258 knows the extent to which accumulator 9 has completed the cycle. This information enables controller 258 to synchronize the operation of stacker wheel 59 to the operation of accumulator 9. Controller 258 thereby controls stacker wheel 59 so that the transporters T pick up every other row R of rolls A from belts 39 and place them in the raised transfer position RT for timely delivery of stacks S to accumulator 9.

In operation, the user inputs an integer number N through keyboard 202 corresponding to the desired number of stacked rolls S to be accumulated and bundled in each wrapped package output from wrapping apparatus 13. Controller 258 then counts the pulses received via line 254 to synchronize the number N of stacker wheel cycles to each accumulator cycle so that there are N stacker wheel cycles for each accumulator cycle. As used herein, the term "stacker wheel cycle" means the operation required of stacker wheel 59 in order to make one stack S of rolls. If four transporters T are mounted on the stacker wheel 59, then one stacker wheel cycle would be a quarter turn of the wheel. If only two transporters T are mounted on the stacker wheel 59, then one stacker wheel cycle would be a half turn of the wheel. For purposes of control, it will be noted that switch 256 outputs a signal to controller 258 one time for each stacker wheel cycle. As used herein the term "accumulator cycle" means one operating cycle wherein accumulator 9 accumulates one or more stacks S from stacker 1 and passes them on to wrapping apparatus 13 for further processing. For purposes of control, it will be noted that switch 242 outputs a signal to controller 244 one time for each accumulation cycle.

For example, if N equals one, meaning that there is to be one stack S per wrapped package, then controller 258 controls stacker wheel 59 to assemble one stack S of rolls for each time a flight of accumulator 9 outputs product. Accordingly, for each signal from switch 256 there is a corresponding signal from switch 242. Likewise, if N equals two meaning that there are to be two stacks S per wrapped package, then controller 258 controls stacker wheel 59 to assemble two stacks S of rolls for each time a flight of accumulator 9 outputs product. In this example, the flights of accumulator 9 output a pair of stacks S constituting an accumulated or larger stack 11 during each accumulator cycle. Accordingly, for every two signals from switch 256 there is only one corresponding signal from switch 242. Similar operation is programmed via this "N to 1" ratio between stacker wheel cycles and accumulator cycles for any other desired number of stacks S per wrapped package (e.g. three stacks S as shown in Fig. 1).

The operation whereby switch 256 outputs a signal one time for each stacker wheel cycle is also used for several other purposes. For example, the signal from switch 256 is used to verify that the correct number of transporters T have been attached to wheel 59 in the correct positions as required by the operating program. If a discrepancy is found between the location of the transporters T and the operating program, the program stops further operation and signals an error. This saves time and scrap. A second use of the signal from switch 256 is to automatically configure the present packaging apparatus to the product being packaged without operator intervention. The total number of revolutions of motor M4 per revolution of wheel 59 is a known parameter based on the gear ratio between motor M4 and wheel 59. By rotating wheel 59 in a set up mode for one revolution during which controller 258 counts the reference pulses on line 268, the effective "job space" of the wheel is determined. A third use of the signal from switch 256 is to detect repetitive job spaces at regular intervals. If such job spaces are not detected, controller 258 stops further operation and signals a hardware installation error signifying the sensing bolts have not been installed uniformly. This too saves time and scrap.

In order to achieve reliable operation at high speeds, it is desirable to minimize the impact between the rolls to be packaged and the stacker wheel 59. This can be achieved by lowering the axis of stacker wheel 59 with respect to the plane of travel of the rolls A. A limitation on this approach is the minimum clearance required to lift the rolls A to the raised transfer position RT. A second approach is to reduce the diameter of stacker wheel 59. Again, this approach is limited by the minimum clearance required to lift the rolls to the raised transfer position RT. A third approach is to program the velocity profile of motor M4 to reduce the rotational velocity of stacker wheel 59 at impact while maintaining the rotational velocity required to achieve synchronization with the downstream equipment by increasing the rotational velocity of wheel 59 in the remaining portion of the cycle. A fourth approach is to use a mechanical gearbox, such as an indexing drive, which provides relatively low velocity at the point of impact and higher velocity during the remainder of the cycle. Thus control axis A4 and/or the indexing drive comprise means for selecting a first rotational velocity for wheel 59 during the period of time when transporters T pick up rolls A and means for increasing the rotational velocity of wheel 59 above the first rotational velocity during a portion of the remaining operational cycle of wheel 59.

Control axis A5 is a closed loop control system which controls motor M5 to drive the upper and lower belts of flight conveyor 15 at the same speed via a pulley and drive belt (not shown). Hold down conveyor 49, conveyor 35, and any optional stacker conveyor or upender are also driven by motor M5 via a suitable drive mechanism (not shown). The drive mechanism is preferably designed so that the belt speed of flight conveyor 15 is nearly equal to the belt speed of conveyor 37 and so that the belt speed of the hold down conveyor 49 is matched to the belt speed of flight conveyor 15 .Axis A5 includes a stacker conveyor/optional upender controller 272, a servo amplifier 274 and the encoder on motor M5. Motor M5 is energized by servo amplifier 274 via lines 280. Controller 272 controls servo amplifier 274 via a line 278. Lines 282 provide pulses from the encoder on motor M5 to controller 272 and servo amplifier 274. The pulses correspond to the actual velocity and direction of motor M5. Controller 272 thereby controls the operation of motor M5.

Controller 272 is also connected to proximity switch 270 via line 276. As described above, switch 270 is positioned adjacent the path of flights 17 on conveyor 15. Controller 272 receives the reference signal from switch 270 to calculate the position of the flights. Further, controller 272 is programmed with data relating the revolutions of motor M5 to the movement of flights 17. Controller 272 thus controls the motion of conveyor 15 by controlling the velocity and position of motor M5 following detection of flights 17 in order to control the position of the flights.

Controller 272 also receives the reference signal output by registration mark detector 206 via line 212 and the pulses emitted by the encoder on motor M4 via line 268. Controller 272 uses the reference signal from detector 206 for determining the time when a particular stacker wheel cycle begins. Controller 272 is preprogrammed with the total number of pulses emitted by the encoder on motor M4 during one stacker wheel cycle. By counting the pulses following receipt of the reference signal from detector 206, controller 272 knows the extent to which stacker wheel 59 has completed the cycle. This information enables controller 272 to synchronize the operation of conveyor 15 to the operation of stacker wheel 59. Because controller 272 now knows the position of flights 17 and the pulse count from the encoder on motor M4, controller 272 controls conveyor 15 so that each of flights 17 carry one row R of rolls A from choke belt conveyor system 29 and deliver them with the proper spacing and timing so that transporters T pick up every other row R of rolls A for further processing by stacker 1.

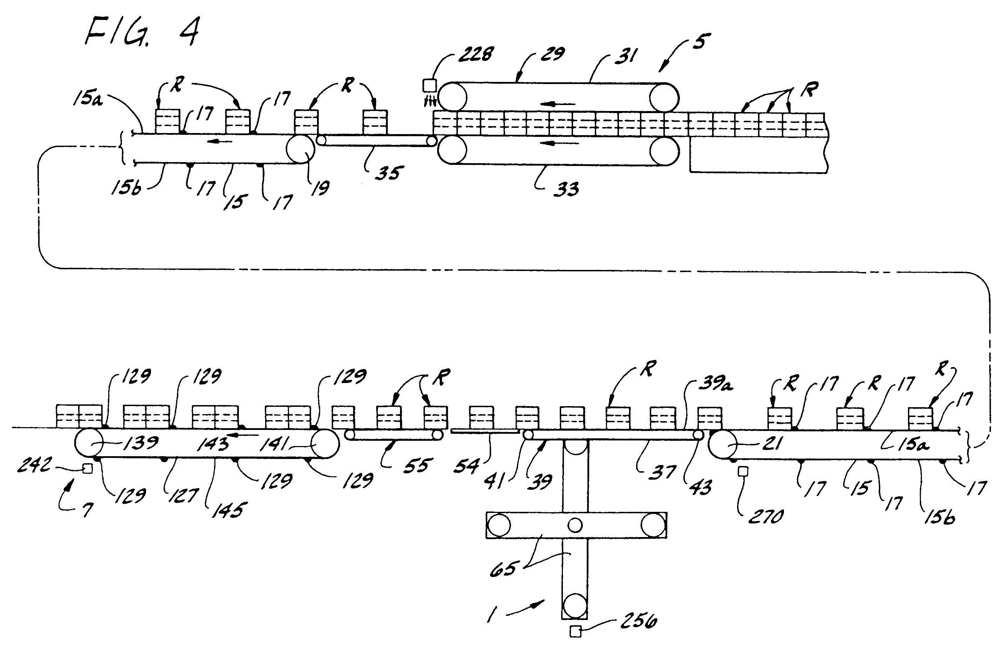

As seen above, the rate of operation of wrapping apparatus 13 under the control of control axis A1 sets the rate of operation for the rest of the upstream components in the present system. The faster wrapping apparatus 13 is driven, the faster the upstream components must operate in order to satisfy the increasing requirements of wrapping apparatus for stacks 11. Likewise, the upstream components must operate more slowly when the wrapping apparatus is driven at slower speeds. Accordingly, the faster control axis A1 drives motor M1, the faster control axes A2 through A5 must drive motors M2 through M5, respectively, and vice versa. It will be seen that the components of the present system are controlled to meet the requirements of wrapping apparatus 13 following the timing shown in Figs. 4, 13a-r and 14a-j.

It will be understood by those skilled in the art that a different reference frame apart from that described herein could be used to synchronize the components of the present system within the scope of the present invention. It will also be understood that the control axes A1 through A5 could he interconnected with other control lines and feedback lines to achieve said synchronization within the scope of the present invention. It will be further understood that the proximity switches, electrical eyes, and other sensors described above as part of the control system of the present apparatus could be replaced by any of the many commonly found sensors and detectors which perform the same or a similar function as that described above within the scope of the present invention.

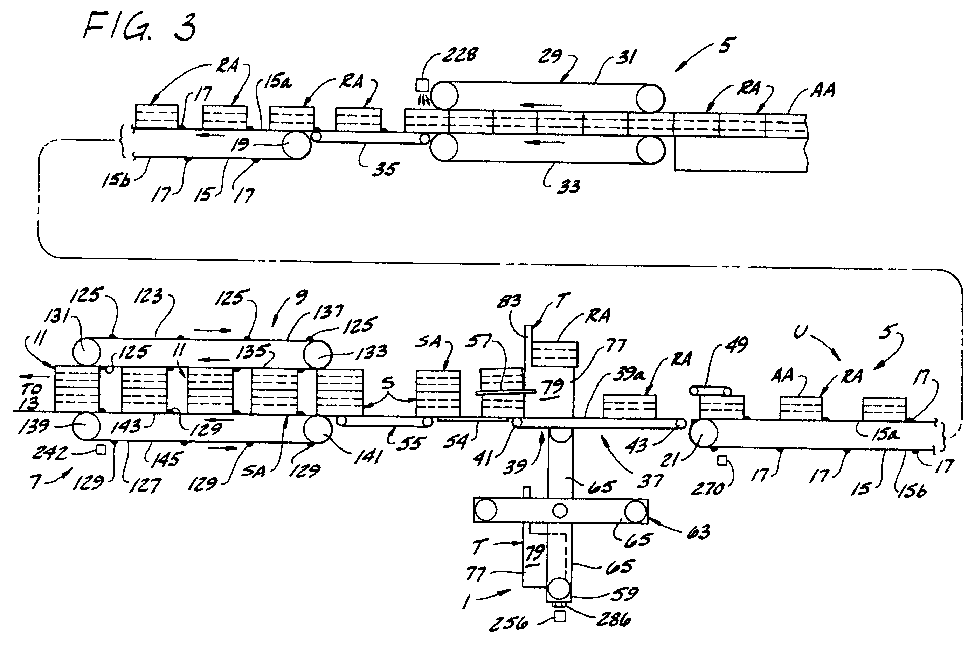

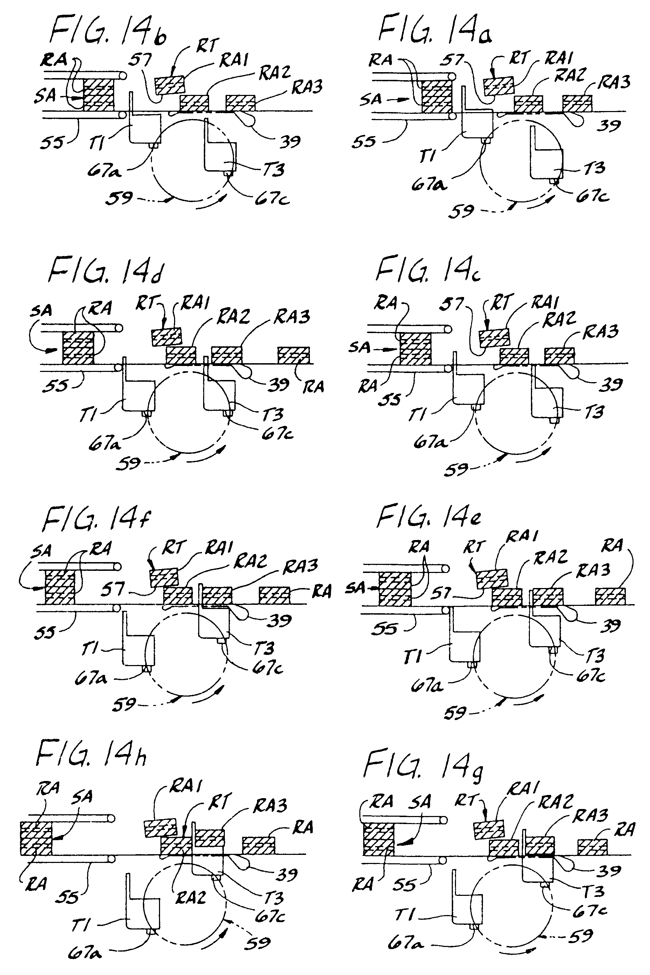

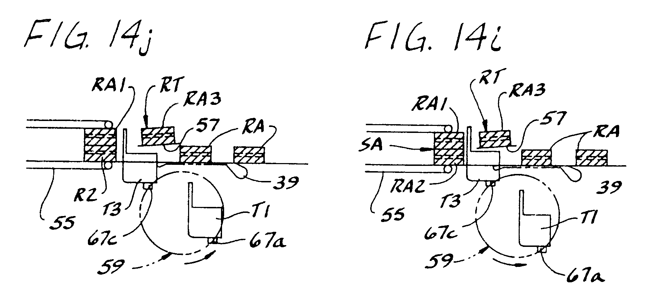

Figs. 13a-r illustrate the operation of the apparatus for stacking rows R of rolls A of toilet tissue in "cores-up" (cores vertical) configuration, with four transporters T in a row side-by-side on each cross-shaft 67 on the wheel and for forming four stacks S each comprising one row R on top of another on each revolution of the wheel 59, thus forming a stack S on each quarter-revolution of the wheel. Each row R may comprise two, three or four rolls A depending on whether two lanes, e.g. L1 and L2, three lanes, e.g. L1, L2 and L3 or all four lanes L1-L4 are supplied with rolls. Assuming two lanes are supplied with rolls, each stack S will comprise a row R of two rolls stacked on top of a row R of two rolls. If three lanes are supplied with rolls, each stack will comprise a row R of three rolls stacked on top of a row R of three rolls, and if all four lanes are supplied with rolls, each stack will comprise a row R of four rolls stacked on top of a row of four rolls. It will be understood that only one lane e.g. L1 could be supplied with rolls, in which case each stack would comprise one roll stacked on top of another. The operation is similar in each instance. Figs. 13a-r show rows R of two, three or four rolls being stacked, the rows R being viewed from one end thereof so that an end roll A of each row R is what appears in Figs. 13a-r. While Figs. 13a-r illustrate the operation with all four transporter shafts 67 on the wheel 59, spaced at 90° intervals around the wheel axis, each shaft carrying four transporters side-by-side, it may here be mentioned that two of the shafts spaced at 180° intervals along with the four transporters T on these two shafts may be removed from the wheel for a mode of operation wherein two stacks are formed on each revolution of the wheel, thus forming a stack on each half-revolution of the wheel. This mode of operation is illustrated in Figs. 3 and 14a-r for cores-down rolls A1 of paper toweling. It may here be further mentioned that all four of the shafts 67 and the transporters T thereon may be removed from the wheel for a mode of operation without stacking of the rolls, i.e. passage of the rolls through the stacker without stacking, as illustrated in Fig. 4.

In the mode of operation illustrated in Figs. 13a-r, with all four shafts 67 and all four rows of transporters T (with four transporters in each row on each shaft), on the wheel 59, motor M1 is powered under control of the controller 200 to operate the wrapper 13 at a selected speed (e.g. 80 wraps per minute. Motors M2-M5 are powered under closed-loop control as set forth above to operate the choke belt conveyor 29 (motor M2), the accumulator 9 and the stacker belts 39 (motor M3), the wheel 59 (motor M4) and the infeed flight conveyor 15 and the associated belts 49 (motor M5) at speeds so related to the wrapper speed as to supply the wrapper demand, i.e. the number of stacks 11 needed by the wrapper per minute, taking into account the number of rows of rolls in each stack 11. The number of rolls in each row is determined by use of the requisite number of lanes L1-L4. The number of stacks S per package is entered as a number N via keyboard 202 as described above.

In Figs. 13a-r, the four successive rows of transporters T are specially indicated at T1, T2, T3 and T4. In Fig. 13a, the starting figure of the series of Figs. 13a-r, the shaft 67 carrying transporters T1 (there are four of these in a row transversely of the apparatus, one for each of the four lanes L1-L4) is specially designated 67a and the shaft carrying transporters T2 is specially designated 67b. The wheel 59 is shown in Fig. 13a in a position wherein the shaft 67a carrying transporters T1 has come around the peak position (the 12 o'clock position) of its circular path of revolution with the wheel and is moving forward (i.e., in downstream direction) and downward. With the shaft 67a in this position, the transporter T1 is in a position wherein it is about to deposit a row R1 of rolls on the rails 57. The shaft 67b is in a position (at about 2 o'clock) trailing the shaft 67a 90°, and is moving up and forward. There is a stack S1 of two rows of rolls, one row on top of the other on the dead plates 54 adjacent their downstream ends and a stack S2 on the dead plates 54 adjacent their upstream ends. The upstream side of this stack S2 is contiguous to the front edges 77a of the side plates 77 of transporters T1. There is a row R1 of rolls on the upper edges 121 of the base portions 79 (which may also be referred to as the seat portions) of transporters T1 about to be lowered and deposited on the rails 57 and a row of rolls R2 on the stacker belts 39 about to pass under the rails and the row R1. A row R3 trails row R2 on the stacker belts and a row R4 trails R3.

As the wheel continues its rotation, carrying transporters T1 and T2 around in their circular path of travel, transporters T1 push forward the stack S2 and stack S2 pushes forward the stack S1, the latter being entered in the choke belt conveyor 55 which feeds it forward (see Figs. 13b-k). The stack S2 comes into the S1 position. The transporter T1, moving forward and downward, also deposits the row R1 of rolls on the rails 57, this row subsequently to become the top row of a stack at S2.

While the transporter T1 is functioning as above described, the transporter T2 (the next after T1 in the series T1-T4) is moving upward and forward from the 2 o'clock position shown in Fig. 13a wherein the upper edges 121 of their base or seat portions 79 are just below the level of the upper reaches 39a of the four stacker belts 39 and wherein the upwardly extending fingers 83 of the transporters T2 extend up on opposite sides of the stacker belts above the level of their upper reaches. The forward feed of the rows of rolls through the stacker, the spacing of the rows, the speed of the wheel 59 and the phasing of the transporters with respect to the feed of the rows is such that the fingers 83 come up between rows R2 and R3 (the next row upstream from row R2) in the space therebetween. The four transporters T2, at this point, are moving upward and forward with a forward speed less than the speed of the rows (i.e. less than the speed of the upper reaches of the stacker belt) and the row R3 overtakes the transporters T2 and comes into a position wherein the rolls in the row engage against the rear edges of the fingers 83, which act as stops for the rolls in the row. Thus, each roll A in Row R3 is seated at its lower end on the upper edges 121 of the seat portions 79 of the respective transporter T2.

As shown in Figs. 13b-i, transporters T2, continuing their rise, pick up the row R3 off the upper reaches 39a of the stacker belts 39 and move this row upward and forward. The transporters T2 reach their maximum elevation when the shaft 67b carrying them reaches its peak (see Fig. 13k) at the top of the circular path of travel of the shafts (i.e. at 12 o'clock). Then as the shaft 67b continues on in its circular path, it moves farther forward and down, and as it does so the transporters T2 are carried further forward and down between the respective pairs of rails 57. As the upper edges 121 of the base portions 79 of each transporter T2 descends below the level of the respective rails, the respective roll is held up by the rails and thereby deposited thereon in the RT position. As each transporter T2 moves forward (and down and passes by the respective rails, its edges 77a, which may be referred to as the back edges of the transporter (the transporter resembling a chair with a seat at 121 and a back at 77a) engage the row R1 on the rails 57 and push it forward (downstream) off the rails. At the same time, row R2 is moved forward by the transporters R2 underneath the row R1 as row R1 slides forward off the rails and the latter is thereby placed on top of the row R2 as it moves forward thereby to form a stack which is pushed forward by the transporter to become the stack S1.

Having pushed the stack S2 forward to become the stack at S1 (and thereby having pushed the stack which was at S1 onto the choke belt conveyor 55 to be fed forward thereby) the transporters T1 move downward, their fingers 83 sliding down and off the upstream side of the stack at S1, leaving it in the S1 position adjacent the downstream end of the dead plates 54 (see Figs. 13k-13r). Transporters T2 move up, forward and downward, deposit the next row R1 in position RT on the rails 57, and then proceed onward ultimately returning to the starting position shown in Fig 13a.

From the above it will appear that a row R of rolls A (row R3 as shown in Fig. 13a) is picked up by a row of transporters T (transporters T2 as shown in Fig. 13a) at the pick-up station P in synchronous relationship with rows R being fed forward, transported to and transitorily held in the raised transfer position RT, and pushed forward out of position RT for placement on top of the oncoming row R (R2 in Fig. 13a) as the latter continues to move forward at the level of the horizontal path of the series of rows.

Stacks (stacks 51) are delivered forward one after another at timed intervals to the downstream equipment starting with the choke belt conveyor 55. The delivery of a stack occurs as each row or rank of transporters comes down and around from the Fig. 13a position, thus occurring once every quarter-revolution of the wheel 59 with four rows or ranks of transporters (T1-T4) thereon.

As shown in Fig. 3 and Figs. 14a-j the apparatus is adapted to stack rows RA of rolls AA of paper toweling in cores down configuration, utilizing only two of the four rows or ranks of transporters spaced 180° around the wheel 59. For this purpose, the T2 and T4 transporters are removed by removing the shafts 67 carrying these transporters, leaving transporters T1 and T3 on the wheel. In Fig. 14a, the shaft carrying the transporters T1 is again designated 67a and the shaft carrying the transporters T3 is designated 67c. The wheel 59 is shown in a position wherein the shaft 67a carrying the transporters T1 is at about the 10 o'clock position with transporters T1 coming down and moving forward and wherein shaft 67c carrying the transporters T3 is at about the 4 o'clock position with transporters T3 moving up and rearward. A stack SA of two rows of rolls AA has just been entered in the conveyor 55. There is a row RA1 in the transfer position RT on the rails, a row RA2 on the stacker belts 39 about to pass under the row RA1, and a row RA3 on the stacker belts trailing row RA2.

As the wheel 59 continues its rotation, the stacker belts 39 continue to feed forward the rows RA2 and RA3. Transporters T1 move down and around and up as shown in Figs. 14a et seq., ultimately reaching the T3 position of Fig. 14a. At the time rows RA2 and RA3 have moved forward from the Fig. 14a through the Fig. 14b position to the Fig. 14c position. The fingers 83 of the transporters T3 start to come up on opposite sides of the stacker belts above the level of the upper reaches of these belts, passing up through the space between rows RA2 and RA3. Row R3 is advanced by the stacker belts to a position wherein the downstream ends of the rolls in the row engage the upstream edges of the transporter fingers 83 (again acting as stops for the row). The rolls in the row are picked up off the upper reaches of the stacker belts, being cradled in the transporters T3 and moved upward and forward (see Figs. 14 et seq.). The downstream edges of transporters T3 engage row RA1 at the RT transfer position and push it forward. At the same time they push forward the row RA2, which passes under the rail and under the row RA1 as it is pushed off the rails thereby to form a stack SA. The stack is pushed forward by the transporters T3 and entered in the conveyor 55. As the transporters come down and forward they park the row RA3 on the rails 57, this row thus becoming the RA1 row. With the new row in position at RA1, the cycle repeats. It will be observed that a stack SA is formed and delivered on each half-revolution of the wheel 59, as distinguished from a stack S being formed and delivered on each quarter-revolution of the wheel in the mode of operation shown in Figs. 13a-r.

As illustrated in Fig. 4, the apparatus is adapted to handle rows R of rolls A without stacking of the rows, by removal of all the transporters T on the wheel 59. In this mode of operation, the wheel continues to rotate but, without transporters on the wheel, there is no stacking.

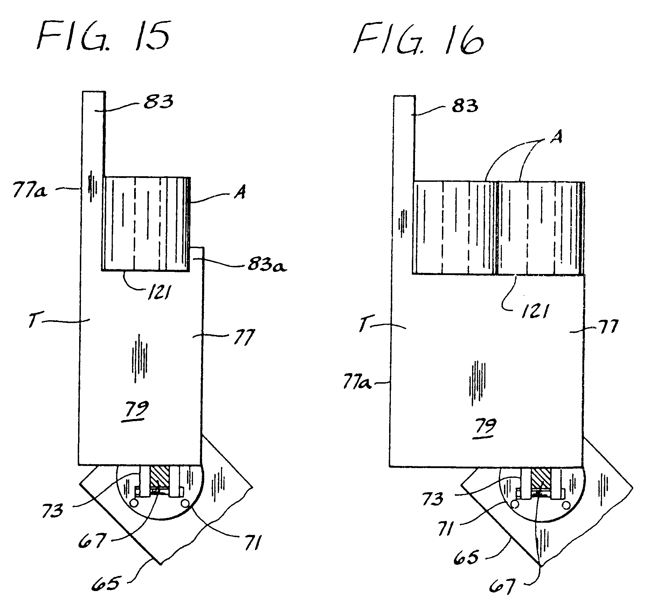

Fig. 15 shows a modification of the transporters T involving the provision of a short upwardly extending finger 83a at the upper upstream corner of the base or seat portions 79 of the side plates 77 of each transporter for backing up the roll on the transporter and preventing it from sliding back off the transporter.

Fig. 16 shows a modification in the operation of the apparatus involving the picking up and stacking of double rows RR of rolls A on the transporters, instead of single rows as in Figs. 1 and 13a-4.

In view of the above, it will be seen that the several objects of the invention are achieved and other advantageous results attained.

As various changes could be made in the above constructions and methods without departing from the scope of the invention, it is intended that all matter contained in the above description or shown in the accompanying drawings shall be interpreted as illustrative and not in a limiting sense.

## Claims

1. The method of forming stacks of articles and feeding the stacks forward in a predetermined accumulated pattern comprising,
feeding forward articles to be stacked generally continuously one after another in series in a generally horizontal path at a predetermined level with the articles generally at equally spaced apart intervals along said path,
picking up the first of two successive articles in said series with an upward and forward motion and in synchronous relationship with the articles being fed forward and depositing said first article in a position above said level and feeding forward at the said level the second of the two successive articles underneath the first for the accumulation of a stack of two articles comprising the first article on top of the second article, and
delivering the said stacks forward one after another at timed intervals.

2. The method of forming stacks of articles each comprising a first article stacked on top of a second article and feeding the stacks forward comprising;
feeding forward articles to be stacked generally continuously one after another in series in a generally horizontal path at a predetermined level with the articles at spaced apart intervals along said path,
picking up the first of two successive articles in said series in synchronous relationship with the articles being fed forward and transporting said first article to a position above said level for placement of said first article on top of the second of the two successive articles as said second article continues to move forward at said level;
placing the first article on top of the second as the second continues to move forward at said level for accumulation of the two articles in a stack comprising the first article on top of the second article; and
delivering the said stacks forward one after another at timed intervals.

3. The method of claim 2 wherein the first of two successive articles in the series is picked up at a pick-up station along said path, transported upward and forward and then downward for transitory deposit of said first article in a raised transfer position above said level, said first article being fed forward from said raised transfer position to transfer it onto the top of the said second article as said second article continues to move forward in said path at said level and passes underneath the first article.

4. The method of claim 3 wherein the said first article is fed forward and upward and then downward in an arcuate path for said transitory deposit in said raised transfer position; wherein the said first article is transitorily deposited on a support in said raised transfer position as it is fed downward and forward in said arcuate path and rests on said support in said raised transfer position until it is fed forward off said support for placement on top of the said second article as said second article is moving forward in said path at said level; wherein the second article moves forward under said support and said first article is pushed off said support on top of the second article as the latter moves out from under said support; and wherein a stack is delivered by pushing it forward as the said first article is deposited on said support.

5. The method of claim 2 wherein articles are fed forward in side-by-side relation in rows, the rows being fed forward in series and the first of two successive rows being picked up and transferred on to the second of two successive rows to form a stack.

6. The method of claim 5 wherein the first of two successive rows in the series of rows is picked up at a pick-up station along said path, transported upward and forward and then downward for transitory deposit of said first row of articles in a raised transfer position above said level, said first row being fed forward from said raised transfer position to transfer it onto the top of the said second row as said second row continues to move forward in said path at said level and passes underneath the first row; wherein the said first row is fed forward and upward and then downward in an arcuate path for said transitory deposit in said raised transfer position; wherein the said first row is transitorily deposited on a support in said raised transfer position as it is fed downward and forward in said arcuate path and rests on said support in said raised transfer position until it is fed forward off said support for placement on top of the said second row as said second row is moving forward in said path at said level; and wherein the second row moves forward under said support and said first row is pushed off said support on top of the second row as the latter moves out from under said support.

7. Apparatus for forming stacks of articles and feeding the stacks forward comprising:
means for feeding forward articles to be stacked generally continuously one after another in series in a generally horizontal path at a predetermined level with the articles at spaced apart intervals along said path;
transport means for picking up the first of two successive articles of the series with an upward and forward motion and in synchronous relationship with the articles being fed forward and transporting said first article to a position above said level for placement Of said first article on top of the second;
said feeding means continuing to move the second of the two successive articles forward at said level and said second article coming underneath the first for the accumulation of the two articles in a stack comprising the first on top of the second.

8. Apparatus as set forth in claim 7 wherein said transport means also acts to deliver the stacks forward at timed intervals.

9. Apparatus as set forth in claim 8 having a pick-up station along said path and means for transitorily supporting the first article in a raised transfer position downstream from said pick-up station, said transport means being operable to pick up the said first article at said pick-up station and to transport said first article upward, forward and downward for depositing it on said supporting means, said transport means being one of a series of transporters each operable one after another for picking up said first article and transporting it to said raised transfer position, said transporters being operable one after another to feed the said first article on said support forward off the supporting means to place it on top of the said second article as the second article continues to move forward in said path at said level and passes underneath the first article as the latter is fed forward off the supporting means, the series of transporters being an endless series continuously movable in an endless path, and said apparatus further having means for moving the series of transporters in a circular path comprising a wheel rotatable on a generally horizontal axis extending transversely with respect to said generally horizontal path below said generally horizontal path, said apparatus having means for continuously driving the wheel in the direction for moving the transporters in said circular path wherein the transporters move up from below the level of said generally horizontal path above said level and then forward and downward for picking up the first article and depositing it on said supporting means, and for operation of each transporter to push an article forward off said supporting means as the transporter comes into position to deposit an article on said supporting means.

10. Apparatus as set forth in claim 9 wherein each transporter is formed for seating an article thereon and said apparatus has means for maintaining each transporter in an article-seating orientation as the wheel rotates.

11. Apparatus as set forth in claim 10 for forming stacks of rows of articles, each row comprising a plurality of articles disposed side-by-side in the row, in a plurality of lanes, the feeding means comprising a plurality of belt conveyors, one in each lane, for feeding articles in a row forward.

12. Apparatus as set forth in claim 11 wherein the wheel has end members and a plurality of transporter shafts extending between the end members, said apparatus having a plurality of transporters carried by each shaft in side-by-side relation with a circular series of transporters in each lane, each shaft being removably carried by the wheel for removal therefrom of the shaft and the transporters carried thereby, each transporter comprising a pair of side plates operable in planes at opposite sides of each belt conveyor, and each side plate of each pair having a seat portion for seating an article thereon and an upwardly extending back portion constituting a stop for articles fed by the belt conveyors onto the seat portions of the transporters.

13. Apparatus as set forth in claim 12 wherein each of said belt conveyors comprises a pair of belts arranged side-by-side with a space therebetween, and each transporter comprises a single plate operable in a vertical plane between the respective pair of belts, and wherein means is provided for maintaining rolls on the plates, each plate having a seat portion for seating an article thereon and an upwardly extending back portion constituting a stop for articles fed by the belt conveyors onto the seat portions of the transporters, and each transporter being moveable with the wheel in a circular path upward and forward from a position below the upper reaches of the belt conveyors at the pick-up station, then downward and forward to deposit a row on laid supporting means, to push a row forward off said supporting means, and to push a stack forward for said delivery.

14. Apparatus as set forth in claim 7 further comprising a closed loop control system for controlling the motion of the transport means.

15. Apparatus as set forth in claim 14 wherein the closed loop control system comprises means for sensing the position of the transport means and means for controlling the motion of the transport means as a function of the sensed position.

16. Apparatus as set forth in claim 15 wherein the transport means comprises a series of transporters movable continuously in an endless path for picking up said first article and transporting it to said position above said level and wherein the sensing means comprises a proximity switch positioned adjacent the path for detecting the presence of the transporters.

17. Apparatus as set forth in claim 16 wherein the transport means comprises a wheel, a motor for driving the wheel, and a series of transporters carried by the wheel for picking up said first article and transporting it to said position above said level during each operational cycle of the transport means, and wherein the control system comprises means for varying the rotational velocity of the wheel during an operational cycle of the transport means as a function of a preprogrammed velocity profile, means for selecting a first rotational velocity for the wheel during the period of time when the transporters pick up said first article, and means for increasing the rotational velocity of the wheel above the first rotational velocity during a portion of the remaining operational cycle of the transport means.

18. Apparatus as set forth in claim 7 wherein the transport means comprises:
a wheel;
an indexing drive coupled to the wheel;
a motor coupled to the indexing drive for rotational movement of the wheel; and
a series of transporters carried by the wheel for picking up said first article and transporting it to said position above said level.

19. Apparatus for forming stacks of articles and for processing the stacks, the apparatus comprising:
means for processing the stacks;
means for continuously driving the processing means at a selected rate of operation;
means for forming stacks of articles;
means for continuously driving the stack forming means for forming stacks one after another for delivery downstream for being processed;
means for feeding articles to the stack forming means to be stacked thereby;
means for continuously driving the feeding means; and
a closed loop control system for synchronizing the operation of the processing means, the stack forming means; and
the feeding means.

20. The apparatus of claim 19 wherein the processing means comprises means for wrapping the stacks, the processing driving means, the stack forming driving means, and the feeding driving means each comprising a servomotor, the closed loop control system comprising a first closed loop control axis for controlling the processing means, a second closed loop control axis for controlling the stack forming means, and a third closed loop control axis for controlling the feeding means, and the processing means comprising means for wrapping the stacks with a web bearing a registration mark, said apparatus further comprising means for detecting the registration mark and outputting a detection signal corresponding to detection of the mark, said first closed loop control axis comprising means for outputting a timing signal, and said second and third closed loop control axes receiving the detection signal and the timing signal for synchronizing the operation of the stack forming means and the feeding means with the operation of the processing means.

21. The apparatus of claim 19 wherein the closed loop control system comprises a first closed loop control axis for controlling the processing means and a second closed loop control axis for controlling the stack forming means.

22. The apparatus of claim 21 wherein the processing means comprises means for wrapping the stacks with a web bearing a registration mark, wherein the apparatus comprises means for detecting the registration mark and outputting a detection signal corresponding to detection of the mark, wherein the first closed loop control axis comprises means for outputting a timing signal, and wherein the second closed loop control axes receives the detection signal and the timing signal for synchronizing the operation of the stack forming means with the operation of the processing means.

23. The apparatus of claim 19 wherein the closed loop control system comprises:
means for selecting a number of stacks to be formed by the stack forming means; and
means for controlling the processing means to process the selected number of stacks as a group.
